# EUROPÄISCHE PATENTSCHRIFT

(11) **EP 0 689 759 B1**
(45) Veröffentlichungstag und Bekanntmachung des Hinweises auf die Patenterteilung: **03.12.1997**
(21) Anmeldenummer: 95810382.2
(22) Anmeldetag: 08.06.1995
(51) Int. Cl.: A01B 33/08, E01C 23/088

(54) **Bodenbearbeitungsgerät**
Soil working apparatus
Appareil pour le travail du sol

(30) Priorität: 27.06.1994 CH 2038/94
(43) Veröffentlichungstag der Anmeldung: 03.01.1996
(73) Patentinhaber: PAMAG AG, CH-8890 Flums (CH)
(72) Erfinder: Dummermuth, Paul, CH-4455 Zunzgen (CH)
(74) Vertreter: Feldmann, Clarence Paul

(56) Entgegenhaltungen:
- EP-A- 0 098 798
- DE-A- 2 143 533
- US-A- 1 964 746

## Beschreibung

Die vorliegende Erfindung betrifft ein Bodenbearbeitungsgerät gemäss Oberbegriff des Patentanspruches 1 (siehe EP-A-98798). Sie betrifft insbesondere eine Bodenfräsmaschine.

Bodenbearbeitungsgeräte werden zum Reinigen, Aufrauhen oder Abtragen von Beton-, Asphalt- oder Metalloberflächen eingesetzt. Als Bearbeitungswerkzeug weisen sie im allgemeinen eine käfigartige, motorisch getriebene Rotortrommel auf, auf deren Käfigachsen mehrere frei rotierende Schlaglamellen angeordnet sind. Die Rotortrommel ist so angeordnet, dass die rotierenden Schlaglamellen die Oberfläche des zu bearbeitenden Bodens abtragen. Die Einstellung der Bearbeitungstiefe erfolgt durch die Verstellung der relativen Rotortrommelachse zur Oberfläche des Bodens. Im allgemeinen geschieht diese Einstellung mittels höhenverstellbaren Laufrädern. Der Vorschub des Bodenbearbeitungsgerätes wird manuell durch die das Gerät bedienende Person erzeugt.

Im Betriebszustand haben derartige Bodenbearbeitungsgeräte infolge der Drehrichtung der Rotortrommel die Neigung davonzulaufen. Die Person, die das Gerät bedient, muss also beim Starten des Motors darauf gefasst sein, dass das Gerät sogleich unkontrollierte Bewegungen ausführt. Aus demselben Grund darf ein einmal gestartetes Bodenbearbeitungsgerät nicht mehr losgelassen werden.

Einige Ausführungsformen der bekannten Bodenbearbeitungsgeräte werden bei Nichtbenützung abgestellt, indem die höhenverstellbaren Räder abgesenkt werden. Dadurch wird die Rotortrommel angehoben und das Gerät liegt lediglich noch auf den Rädern auf dem Boden auf. Die Rotortrommel dreht sich frei ohne den Boden zu bearbeiten. Trotzdem besteht bei derartig abgestellten Maschinen die Gefahr nach wie vor, dass sich die Maschine beim Starten des Rotorantriebmotors oder beim Parkieren der Maschine unkontrolliert vorwärtsbewegt.

Es ist deshalb Aufgabe der Erfindung, ein Bodenbearbeitungsgerät zu schaffen, das mit einfachen Mitteln gegen unkontrollierte Bewegungen gesichert werden kann.

Diese Aufgabe löst ein Bodenbearbeitungsgerät mit den Merkmalen des Patentanspruches 1.

Hierbei wird kombinatorisch einerseits mindestens ein Laufrad blockiert, wobei die höhenverstellbaren Räder in diesem Zustand abgesenkt sind. In diesem Zustand ist die Rotortrommel so weit angehoben, dass sie den Boden nicht mehr berührt. Wird das Gerät nun eingeschaltet, so rotiert die Rotortrommel frei und ohne Last, wobei die Räder weiterhin blockiert sind. Das Bodenbearbeitungsgerät ist somit gesichert, es steht still.
In der bevorzugten Ausführungsform besteht das Arretierungsmittel des Laufrades oder der Laufräder aus einem Anschlag, an den das arretierbare Laufrad in seiner abgesenkten Position unter Federeinwirkung gedrückt ist. Dadurch ist das Rad in der Ruhestellung des Gerätes automatisch blockiert. In der einfachsten Variante ist dieser Anschlag Teil des Gehäuses oder das Gehäuse selber. Die Betriebssicherheit derartiger Maschinen wird durch die erfindungsgemässe Arretierung der Räder wesentlich erhöht. Die Arretierung selber ist jedoch einfach gestaltet und auch noch nachträglich an bestehenden Bodenbearbeitungsgeräten erzielbar.

Aus dem Stand der Technik sind zwar Bodenbearbeitungsmaschinen bekannt, die bremsenähnliche Vorrichtungen aufweisen. Es handelt sich dabei aber um Vorrichtungen zur Erzielung eines gleichmässigen Vorschubes im Betriebszustand. Je nach Bodenbeschaffenheit muss die Bedienungsperson das Gerät nämlich bremsen oder stossen. Von der Patentanmelderin sind ein Patent und eine Patentanmeldung bekannt, die derartige Vorschubvorrichtungen offenbaren.

So beschreibt das Schweizer Patent Nr. 666'173 eine Vorrichtung zum Verschieben oder Bremsen eines Flächenreinigungsgerätes. Diese Vorrichtung besteht aus einem Rahmen mit zwei Rädern, einem Sitz für die Bedienungsperson und einem Pedalantrieb. Die Vorrichtung wird an das Gerät gekoppelt, so dass mittels dem Pedalantrieb der Vorschub erzeugt werden kann und das Gerät gleichmässig über die zu bearbeitende Fläche gefahren werden kann.

Die europäische Patentanmeldung Nr. 0'548'009 offenbart ebenfalls eine Vorschubvorrichtung, die an ein Bodenbearbeitungsgerät montiert ist. Diese Vorschubvorrichtung weist ein Reibrad auf, das auf die Laufräder des Gerätes drückt und von einem getrennten Motor betrieben wird. Dadurch wird die Rotationsgeschwindigkeit der Laufräder bestimmt.

Bei beiden offenbarten Bodenbearbeitungsgeräten wird jedoch lediglich ein gleichmässiger Vorschub erzielt. Ein positionssicheres Anhalten des Bodenbearbeitungsgerätes bei laufender Rotortrommel ist mit diesen Lösungen nicht möglich. Vorallem ist beim Einschalten der Maschine keine Arretierung vorhanden. Die obengenannten Nachteile sind deshalb durch diese Geräte nicht behoben.

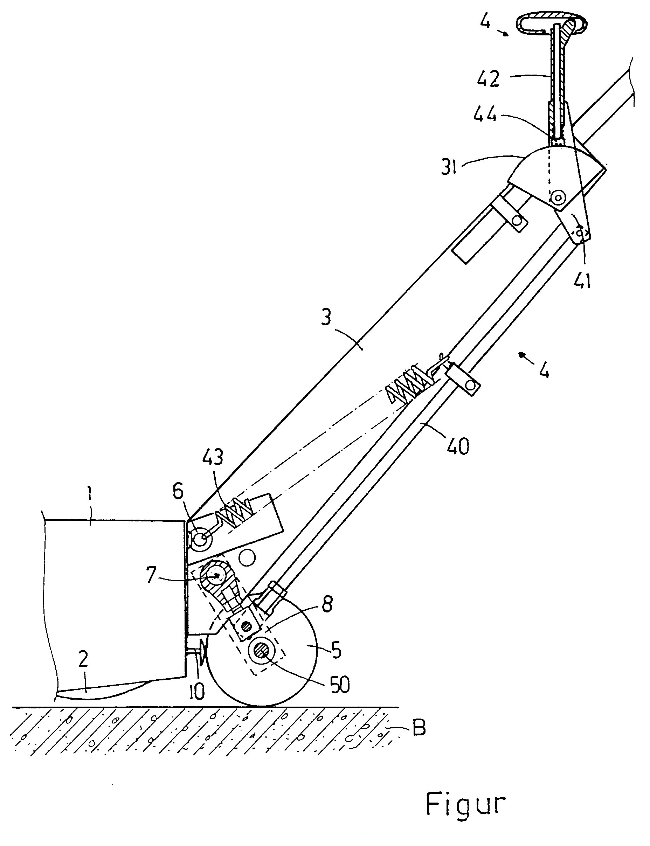

In der beiliegenden Zeichnung ist ein Ausführungsbeispiel des Erfindungsgegenstandes dargestellt und in der nachfolgenden Beschreibung erläutert.

Die einzige Figur zeigt ein Bodenbearbeitungsgerät mit mindestens einem arretierten Laufrad. Tatsächlich weist dieses Gerät zwei Laufräder auf, die jedoch in der Figur in der Seitenansicht exakt deckungsgleich hintereinander liegen.

Das erfindungsgemässe Bodenbearbeitungsgerät weist ein Gehäuse 1 auf, in dem eine Rotortrommel 2 drehbar gelagert ist. Die Rotortrommel besitzt frei drehbare Schlaglamellen, die im Betriebszustand auf den zu bearbeitenden Boden B aufschlagen. Am Gehäuse 1 ist eine Lande 3 angeordnet, die in einen hier nicht dargestellten Handgriff endet. Diese ist in diesem Ausführungsbeispiel nicht schwenkbar, sondern starr am Gehäuse 1 befestigt. Die Lande 3 dient zum Schieben des Bodenbearbeitungsgerätes, wobei die das Gerät bedienende Person den Vorschub manuell bestimmt.

Das Bodenbearbeitungsgerät weist zwei Stützrollen und zwei Laufräder 5 auf. Die zwei Stützrollen sind am Gehäuse angeordnet, wobei sie sich an der von der Lande 3 entgegesetzten Seite befinden. Sie sind in der Figur nicht ersichtlich.
Die zwei Laufräder 5 befinden sich auf der der Lande zugewandten Seite, wobei sie am Gehäuse oder in einem unteren Bereich an der Lande befestigt sind. Diese Laufräder 5 sind höhenverstellbar. Eine hierfür notwendige Höheneinstellvorrichtung 4 ist an der Lande 3 angeordnet. Die Höheneinstellvorrichtung 4 besteht im wesentlichen aus einer Zugstange 40, auch Höhenverstellstab genannt, die annähernd parallel zur Lande 3 verläuft. Die Zugstange 40 ist an ihrem unteren Ende mit einem Schemel 8 verbunden, der um eine horizontale Schwenkachse 7 schwenkbar an der Lande 3 gehalten ist. Am Schemel 8 sind ebenfalls die Laufräder 5 angeordnet, wobei nur eines davon in der Zeichnung sichtbar ist. Wird die Zugstange 40 nach oben bewegt, so werden die Laufräder, beziehungsweise ihre Radachsen 50, um die horizontale Schwenkachse 7 geschwenkt, so dass sich die relative Lage der Radachse zum Boden B verändert und die Laufräder 5 somit höhenverstellt werden.

Die Zugstange 40 ist an ihrem oberen Ende an einer Schwenkgabel 41 gesichert befestigt. Diese Schwenkgabel ist Teil eines Höhenverstellhebels 42. An diesem Höhenverstellhebel 42 ist ein Lagepositionierungsmittel 44 angebracht. Dieses besteht bevorzugterweise aus einer gezahnten Platte, das federbelastet am Höhenverstellhebel 42 angeordnet ist. Dieses Lagepositionierungsmittel 44 steht im Eingriff mit einer an der Lande 3 angeordneten Zahnscheibe 31. Dadurch kann der Höhenverstellhebel 42 in verschiedene, definierte Positionen gebracht und fixiert gehalten werden, wobei jede Position einer bestimmten Höheneinstellung der Laufräder 5 entspricht.

Die Zugstange 40 ist mit einer Rückstellfeder 43 gekoppelt, deren eines Ende im unteren Bereich an der Lande 3 oder wie in diesem Ausführungsbeispiel mittels einer Lasche 6 am Gehäuse 1 befestigt ist. Diese Rückstellfeder 43 hält die Zugstange und damit die Laufräder 5 in einer unteren Endposition, sofern der Höhenverstellhebel 42 nicht in einer anderen definierten, oben beschriebenen Position gehalten ist. Die Laufräder 5 befinden sich dann in ihrer untersten Lage, wobei sie das Gehäuse 1 so weit anheben, dass die Rotortrommel 2 mindestens annähernd vollständig von dem zu bearbeitenden Boden B angehoben ist. In dieser Stellung, die in der Figur dargestellt ist, liegt somit die Maschine lediglich mit ihren abgesenkten Laufrädern 5 und mit den Stützrollen auf dem Boden B auf.
In einer oberen Endposition ist die Rückstellfeder 43 gestreckt, der Schemel 8 wird durch die Zugstange 40 um die horizontale Schwenkachse 7 geschwenkt, so dass die Laufräder 5 leicht angehoben sind, das Gehäuse gesenkt ist und die Rotortrommel 2 auf dem zu bearbeitenden Boden B aufliegt.

Das erfindungsgemässe Bodenbearbeitungsgerät weist mindestens ein Mittel zur Arretierung von mindestens einem der Laufräder 5 auf. In einer bevorzugten Ausführungsform besteht das Arretierungsmittel 10 aus einem Anschlag, der am Gehäuse 1 angeordnet ist oder durch das Gehäuse 1 selber gebildet wird. In diesem Ausführungsbeispiel ist der Anschlag ein Bolzen, der im Bereich des in der Zeichnung sichtbaren Laufrades 5 am Gehäuse 1 angeordnet ist. Das Laufrad steht in seiner unteren Endposition an diesem Arretierungsmittel 10 an. Durch die Kraft der Rückstellfeder 43 wird das Laufrad 5 gegen das Arretierungsmittel 10 gepresst, so dass das Laufrad 5 durch dieses blockiert wird. Das zweite, hier nicht sichtbare Laufrad kann auf dieselbe Weise durch einen weiteren Anschlag blockiert werden.
Durch die Blockierung mindestens eines der Laufräder bei hochgestellter Rotortrommel ist das Bodenbearbeitungsgerät im Nichtbetriebszustand gesichert. Wird der Antriebsmotor der Rotortrommel gestartet, so dreht die Rotortrommel frei, ohne bereits Material abzutragen. Da mindestens ein Laufrad blockiert ist, kann die Maschine keine unkontrollierten Bewegungen ausführen. Die Sicherung wird erst aufgehoben, wenn die Laufräder 5 mittels der Höheneinstellvorrichtung 4 leicht angehoben werden, die Rotortrommel also in ihre Betriebslage abgesenkt wird. Das vorher blockierte Laufrad 5 wird vom Arretierungsmittel 10 weggeschwenkt und kann sich nun frei drehen und auf dem Boden B abrollen.

Das erfindungsgemässe Bodenbearbeitungsgerät ist somit im Nichtbetriebszustand sowie beim Starten und Abschalten des Antriebsmotores auf einfache Weise gesichert. Durch die Blockierung mindestens eines Laufrades kann es sich nicht mehr unkontrolliert fortbewegen. Zudem ist die Blockierung auf einfachste Weise durchzuführen, indem die Laufräder lediglich abgesenkt werden müssen, damit sie an einem Anschlag, der sich im Bereich des Gehäuses befindet, anstehen. Es wird somit nicht das Arretierungsmittel zum Laufrad gebracht, sondern umgekehrt wird die Höheneinstellbarkeit des Rades benützt, um dieses zu blockieren. Zudem kann die Blockierung, das heisst das Absenken der Laufräder, stehend von der das Gerät bedienenden Person ausgeführt werden, da der Höhenverstellhebel der Zugstange im oberen Bereich der Lande angeordnet ist. Das Bodenbearbeitungsgerät wird also automatisch gesichert, sobald es in seine Nichtbetriebslage gebracht wird.

## Patentansprüche

1. Manuell verschiebbares Bodenbearbeitungsgerät, das ein Gehäuse (1), eine motorisch getriebene Rotortrommel (2), die in dem Gehäuse (1) drehbar gelagert ist, eine Lande (3) und höhenverstellbare Laufräder (5) aufweist, wobei in einer unteren Endposition der Laufräder (5) die Rotortrommel (2) annähernd vollständig von dem zu bearbeitenden Boden (B) angehoben ist, dadurch gekennzeichnet, dass das Gerät Mittel zur Arretierung (10) von mindestens einem der Laufräder (5) aufweist, durch die das mindestens eine Laufrad (5) in seiner unteren Endposition arretierbar und blockierbar ist.

2. Bodenbearbeitungsgerät nach Anspruch 1, dadurch gekennzeichnet, dass die Laufräder (5) schwenkbar an der Lande (3) oder am Gehäuse (1) befestigt sind.

3. Bodenbearbeitungsgerät nach Anspruch 1, dadurch gekennzeichnet, dass das Arretierungsmittel (10) ein Anschlag ist und dass das mindestens eine arretierbare Laufrad (5) in seiner unteren Endposition an diesem ansteht.

4. Bodenbearbeitungsgerät nach Anspruch 3, dadurch gekennzeichnet, dass der Anschlag am Gehäuse (1) angebracht ist oder durch das Gehäuse (1) selber gebildet ist.

5. Bodenbearbeitungsgerät nach Anspruch 3, dadurch gekennzeichnet, dass das mindestens eine Laufrad (5) gefedert in dieser untersten Position gehalten ist.

6. Bodenbearbeitungsgerät nach einem der Ansprüche 1 bis 5, dadurch gekennzeichnet, dass die Lande (3) fest mit dem Gehäuse (1) verbunden ist.

7. Bodenbearbeitungsgerät nach Anspruch 6, dadurch gekennzeichnet, dass die Elemente zur Höheneinstellung (4) an der Lande (3) angeordnet sind.

## Claims

1. Manually displaceable implement for ground treatment, comprising a housing (1), a motor-driven rotor drum (2) rotatably seated in the housing (1), a connecting piece (3) and a plurality of height-adjustable running wheels (5), the rotor drum (2) displaced off the ground (B) to be treated in a lower end position of the running wheels (5),
characterized in that the implement has blocking means for blocking (10) at least one of the running wheels (5), thru which the at least one running wheel (5) is stopped and blocked in said lower end position.

2. Implement for ground treatment in accordance with claim 1, characterized in that the running wheels (5) are pivotably fastened on one of the connecting piece (3) and the housing (1).

3. Implement for ground treatment in accordance with claim 1, characterized in that said blocking means (10) comprises a stop, said at least one running wheel (5) resting against said stop in said lower end position of said running wheel (5).

4. Implement for ground treatment in accordance with claim 3, characterized in that the stop is secured to the housing (1) or is integrally formed by the housing (1).

5. Implement for ground treatment in accordance with claim 3, characterized in that the at least one running wheel (5) is maintained in said lower end position in sprung manner.

6. Implement for ground treatment in accordance with one of the claims 1 to 5, characterized in that the connecting piece (3) is fixedly connected to the housing (1).

7. Implement for ground treatment in accordance with claim 6, characterized in that means for height adjustment (4) are disposed on the connecting piece (3).

## Revendications

1. Appareil de traitement du sol déplaçable de façon manuelle comportant un châssis(1), un tambour-rotor (2) entraîné par un moteur, ce tambour étant monté à rotation dans le boîtier (1), un manche (3) et des roues porteuses (5) réglables en hauteur, de sorte que, dans une position d'extrémité inférieure des roues porteuses (5), le tambour-rotor (2) est relevé sensiblement complètement du sol (B) à traiter, caractérisé en ce que l'appareil comprend des moyens pour immobiliser (10) au moins l'une des roues porteuses (5) grâce auxquels au moins une dite roue porteuse (5) est immobilisable et blocable dans sa position d'extrémité inférieure.

2. Appareil de traitement du sol selon la revendication 1, caractérisé en ce que les roues porteuses (5) sont fixées de façon articulée au manche (3) ou au châssis (1).

3. Appareil de traitement du sol selon la revendication 1, caractérisé en ce que le moyen d'immobilisation (10) est une butée et en ce que au moins une roue porteuse (5) immobilisable est, dans sa position d'extrémité inférieure, appliquée contre cette butée.

4. Appareil de traitement du sol selon la revendication 3, caractérisé en ce que la butée est rapportée au châssis(1) ou est formée dans le châssis(1) lui-même.

5. Appareil de traitement du sol selon la revendication 3, caractérisé en ce que au moins une roue porteuse (5) est maintenue dans sa position la plus basse par rappel à ressort.

6. Appareil de traitement du sol selon l'une des revendications 1 à 5, caractérisé en ce que le manche (3) est relié rigidement au châssis(1).

7. Appareil de traitement du sol selon la revendication 6, caractérisé en ce que les éléments pour le réglage de hauteur (4) sont solidaires du manche (3).
